# EUROPEAN PATENT APPLICATION

(11) **EP 3 263 413 A1**
(43) Date of publication of application: **03.01.2018**
(21) Application number: 16176667.0
(22) Date of filing: 28.06.2016
(51) Int. Cl.: B60S 3/04

(54) **A WASH STATION FOR BICYCLES AND OTHER LIGHT CONVEYANCES**

(71) Applicant: Gemlo AB, 412 69 Göteborg (SE)
(72) Inventor: FRIDHOLM, Martin, 412 69 GÖTEBORG (SE)
(74) Representative: Brann AB

(57) **Abstract**

The invention relates to a wash station suitable for bicycles, the wash station comprises a control box (1) that comprises a water inlet (7) configured to be connected to a water source, a water outlet (8) configured to be connected to a water hose (9), and a water conduit (19) extending from the water inlet (7) to the water outlet (8). The wash station is characterized in that the control box (1) comprises a water valve (20) connected to the water conduit (19) and configured to open/close said water conduit (19), the water valve (20) being biased towards a closed state, an electronic control unit (21) operatively connected to the water valve (20), and a water activation member (17) operatively connected to the electronic control unit (21), wherein the electronic control unit (21) is configured to change the state of the water valve (20) from closed to open and to keep the water valve (20) open a predetermined period of time upon a first manipulation of the water activation member (17).

## Description

### Technical field of the Invention

The present invention relates generally to the field of maintenance stations for bicycles, strollers, walkers, wheelchairs, etc., especially suitable to be used in connection to an entrance of a building comprising several flats/apartments.

The present invention relates specifically to the field of wash stations for cleaning bicycles, strollers, walkers, wheelchairs, etc., wherein the wash station comprises a control box having a water inlet configured to be connected to a water source, a water outlet configured to be connected to a water hose and a water conduit extending from the water inlet to the water outlet.

### Background of the Invention

Many people use their bicycles as means for transportation to work and to school, and also for leisure, exercise, etc. As an example, only in Gothenburg, having a population of approximately 550 000, over 100 000 bicycle rides are made every day. All over Europe many people use their bicycles every day year around, and during the last decades there has been a considerable urbanization. Thus, more and more people live in the cities and in buildings comprising several flats. Buying a bicycle today is an investment, and most cyclists do not dare to leave the bicycle in a common storage area in the basement, and the bicycle is kept in the flat or on the balcony. Keeping a bicycle, and other light conveyances, in the flat during the sloshy winter season is not always wanted since the bicycle becomes dirty each time it is used.

The same problems also apply to strollers, walkers, wheelchairs, children having waterproof clothes, training shoes, dogs, etc., and the present invention is not limited to bicycles.

Thereto, in order to prolong the useful life of a bicycle, all bicycles need to be cleaned and maintained at a regular basis during the entire year. Cleaning a bicycle involves principally cleaning the frame, the wheels, the handle, the saddle and the fenders from mud, dirt, dust, sand, etc.

There is usually limited possibility to clean a bicycle, or the like, in connection to a building comprising several flats/apartments. In the best case scenario the basement of the building or the courtyard comprises a water faucet. However, it is normal that no water hose is connected to the water faucet and thereto many water faucets lacks fixed knobs but require a special tool, in order to counteract unauthorized use of the water faucet. A traditional water faucet can be opened and abandoned a long time, leading to superfluous consumption of water and also a risk of water damages in the building.

### Object of the Invention

The present invention aims at obviating the aforementioned disadvantages and failings of previously known wash stations, and at providing an improved wash station. A primary object of the present invention is to provide an improved wash station of the initially defined type that provides access to water in a controlled way. It is another object of the present invention to provide a wash station that prevents superfluous consumption of water with bad intentions. It is another object of the present invention to provide a wash station that also provides access to compressed air in a controlled way.

### Summary of the Invention

According to the invention at least the primary object is attained by means of the initially defined wash station having the features defined in the independent claim. Preferred embodiments of the present invention are further defined in the dependent claims.

According to a first aspect of the present invention, there is provided a wash station of the initially defined type, which is characterized in that the control box comprises a water valve connected to the water conduit and configured to open/close said water conduit, the water valve being biased towards a closed position, an electronic control unit operatively connected to the water valve, and a water activation member operatively connected to the electronic control unit, wherein the electronic control unit is configured to change the state of the water valve from closed to opened and to keep the water valve open a predetermined period of time upon a first manipulation of the water activation member.

Thus, the present invention is based on the insight of having a wash station that provides time-limited access to water offers a lot of satisfaction to those living in the building and also prevents vandalized use.

In a preferred embodiment of the present invention, the water conduit comprises a pressure restriction device arranged upstream the water valve. This means that a restricted flow of water having a restricted pressure leaves the water hose. If the default water pressure and flow of water delivered to the wash station is used in the water hose there is a risk of splashing of dirty water, and thereto a superfluous consumption of water.

According to a preferred embodiment, the wash station comprises a filter insert configured to be installed in a floor drain. Thereby oil and heavy metal is prevented from being transported towards the wastewater treatment plant.

According to a preferred embodiment, the control box comprises an air outlet configured to be connected to an air hose, a compressor having an outlet opening for pressurized air, an air conduit extending from the outlet opening of the compressor to the air outlet, an air activation member operatively connected to the electronic control unit, wherein the electronic control unit is configured to activate the compressor and to operate the compressor a predetermined period of time upon a first manipulation of the air activation member. The compressed air can be used to fill up tires or to blow dirt off the bicycle, etc.

Further advantages with and features of the invention will be apparent from the other dependent claims as well as from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig. 1: is a schematic illustration of the inventive wash station,
- Fig. 2: is a schematic illustration of the inside of the control box according to a first embodiment,
- Fig.3: is a schematic illustration of the inside of the control box according to a second embodiment, and
- Fig. 4: is a schematic illustration of the inside of the control box according to a third embodiment.

### Detailed description of preferred embodiments of the invention

The present invention relates to a wash station suitable for cleaning/maintaining bicycles, strollers, walkers, wheelchairs, etc., in connection to a building comprising several flats/apartments. The wash station can be used in an alcove in the entrance hall, in the courtyard, in the basement, in the garage, etc. The main purpose of the wash station is to provide the people living in the building the service/possibility not to bring dirty bicycles, strollers, etc. into the flat. The wash station is a manual cleaning/ maintenance station with automatic output shut off function.

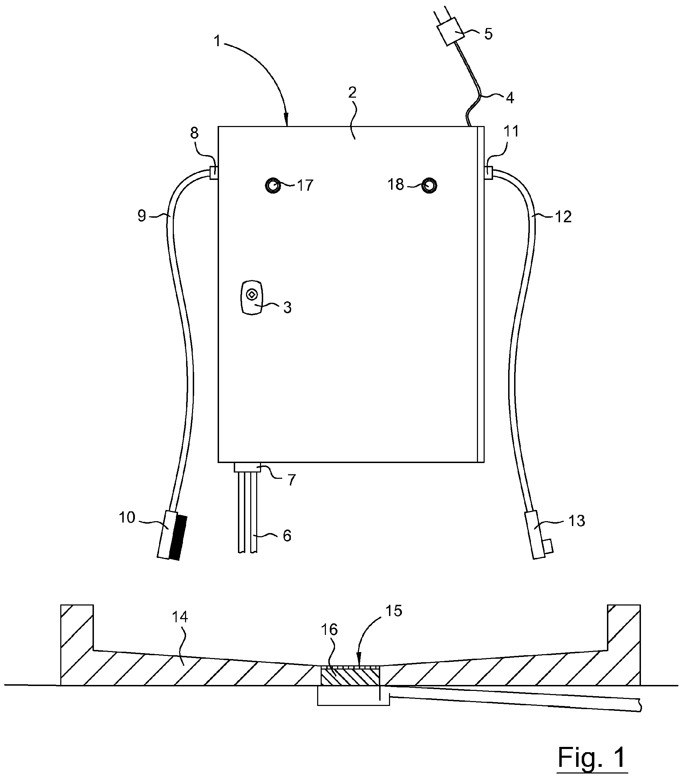

Reference is initially made to figure 1, disclosing a front view of a schematic illustration of the inventive wash station. The disclosed location of the different elements is not limiting for the present invention, but is only one example.

The wash station comprises a control box/cabinet, generally designated 1. The control box 1 is configured to be attached to a wall of the building or to a separate stand in a stable/rigid way. In the disclosed embodiment, the control box 1 comprises a hinged front door 2 that is closed by means of a lock 3 in order to prevent unauthorized access to the inside of the control box 1. The control box 1 is preferably watertight when closed, in order to protect the inside of the control box 1 from water/moist. The control box 1 can be sprayed with water from a water hose and the inside is still dry.

A power supply cable 4 is attached to the control box 1, and preferably the control box 1 is configured for single-phase connection but three-phase connection is also conceivable. The power supply cable 4 is permanently attached to the control box 1 and can either be permanently connected to the power mains or be connected to the power mains by means of a plug 5.

At least one water pipe 6, either rigid or flexible, is connected to a water inlet 7 of the control box 1, in order to supply water from a water source to the wash station. Said at least one water pipe 6 is preferably a cold water pipe or a hot water pipe. According to an alternative embodiment, both a cold water pipe and a hot water pipe are connected to the water inlet 7 of the control box 1. In the disclosed embodiment the water inlet 7 comprises a first connection to be connected to a first pipe configured to supply water having a first temperature (e.g. cold) and a second connection to be connected to a second pipe configured to supply water having a second temperature (e.g. warm). Said at least one water pipe 6 is preferably connected to the water inlet 7 in such a way that a tool, e.g. a wrench, is needed to de-connect the water pipe 6 from the control box 1.

The control box 1 comprises a water outlet 8 configured to be connected to a water hose 9. The water hose 9 is preferably connected to the water outlet 8 in such a way that a tool, e.g. a wrench, is needed to de-connect the water hose 9 from the control box 1. According to an alternative embodiment a quick-connection is used in order to be able to use different water hoses, for instance water hoses having different lengths. The water hose 9 comprises a tool 10 in the free end of the water hose 9, said tool 10 preferably being constituted by a brush or a sponge. The tool 10 is also known as a nozzle. According to an alternative embodiment the wash station comprises several different tools 10 to be connected to the free end of the water hose 9, wherein the free end of the water hose 9 comprises a quick-connection. The tool 10 and/or the water hose 9 preferably comprise an on/off trigger, or the like, in order for the operator to choose to discharge water or not via the tool/nozzle 10.

According to the disclosed embodiment the control box 1 further comprises an air outlet 11 configured to be connected to an air hose 12. The air hose 12 is preferably connected to the air outlet 11 in such a way that a tool, e.g. a wrench, is needed to de-connect the air hose 12 from the control box 1. According to an alternative embodiment a quick-connection is used in order to be able to use different air hoses, for instance air hoses having different lengths. The air hose 12 comprises a tool 13 in the free end of the air hose 12, said tool 13 preferably being constituted by a pump nozzle. According to an alternative embodiment the wash station comprises several different tools 13 to be connected to the free end of the air hose 12, wherein the free end of the air hose 12 comprises a quick-connection. The tool 13 and/or the air hose 12 preferably comprise an on/off trigger, or the like, in order for the operator to choose to discharge air or not via the tool 13.

According to the disclosed embodiment the wash station comprises a trough 14 in order to guide the discharged water and dirt towards a floor drain 15 and to prevent the discharged water to spread uncontrollably over the floor/ground. In an alternative embodiment the wash station comprises an upwardly projecting rim attached to the floor/ground. The floor drain 15 is in a conventional way connected to an external/municipal wastewater treatment plant. In some buildings the floor drain 15 is connected to a local oil trap for removing oil and heavy metals from the dirty water. According to an alternative embodiment the wash station comprises a filter insert 16 configured to be installed in the floor drain 15. The filter insert 16 is configured to remove oil and heavy metals from the water. The filter insert 16 is located below the screen of the floor drain 15. Preferably, the filter insert 16 is constituted by a mesh pouch comprising bark, for instance bark from fur trees, such as pine or spruce. The filter insert 16 shall be exchanged when needed and/or at regular interval, e.g. once a year, and then be disposed in a suitable way. Due to the local/national environmental laws, an installed wash station for bicycles must be equipped with an approved filter that handles the dirty water from the wash station. The filter insert 16 has been approved by their environmental department of Gothenburg town.

The control box 1 also comprises a water activation member 17, for instance a push-button or a spring-biased toggle switch, and an air activation member 18, for instance a push-button or a spring-biased toggle switch. The function of these members will be described hereinbelow.

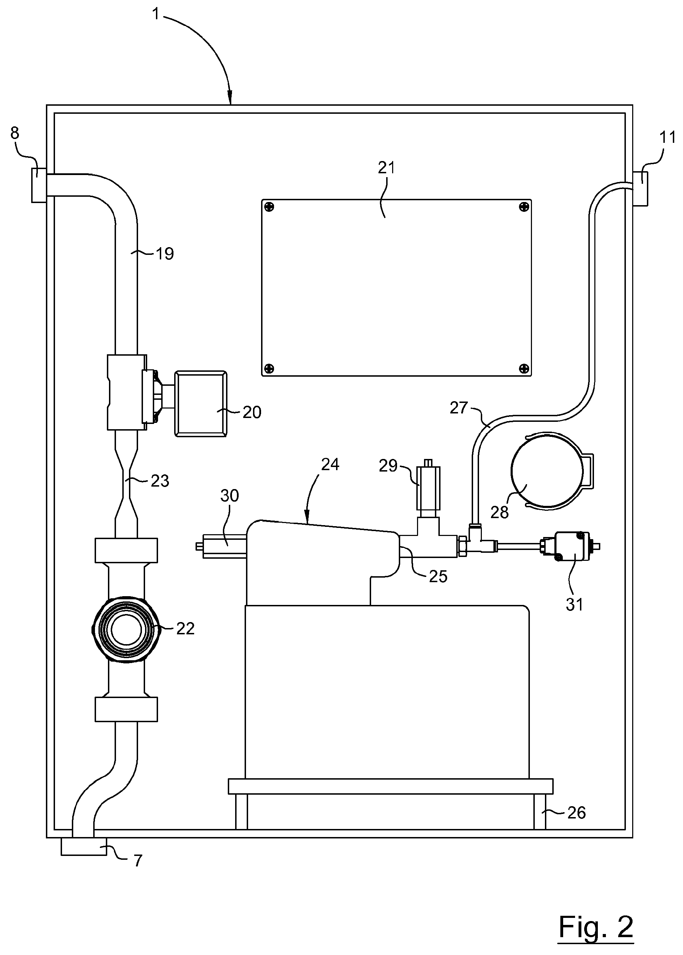

Reference is now also made to figure 2, disclosing a preferred embodiment of the inside of the control box 1.

The control box 1 comprises a water conduit, generally designated 19, extending from the water inlet 7 to the water outlet 8, e.g. the water conduit 19 is configured to lead water from the water inlet 7 to the water outlet 8. Thereto, the control box 1 comprises a water valve 20 connected to the water conduit 19 and configured to open/close the water conduit 19. The water valve 20 is biased towards a closed position, i.e. a position/state in which no water is allowed to flow through the water conduit 19 past the water valve 20. The water valve 20 is preferably a magnetic valve that is closed by means of a mechanical spring and is opened when the electromagnet is activated. The control box 1 comprises an electronic control unit 21, wherein the water valve 20 and the water activation member 17, respectively, are operatively connected to the electronic control unit 21. The electronic control unit 21 is configured to change the position/state of the water valve 20 from closed to open and configured to keep the water valve 20 in the open position/state a predetermined period of time upon a first manipulation of the water activation member 17. Thus, when the water activation member 17 is pushed a first time the water valve 20 is open a predetermined period of time and water can be discharged through the water hose 9 and tool 10. The predetermined period of time is in the disclosed embodiment equal to or less than 1 minute, preferably equal to or les than 30 seconds. The length of the predetermined period of time can be adjusted in the electronic control unit 21. A second manipulation of the water activation member 17 will close the water valve 20 before the predetermined period of time has elapsed, i.e. the second manipulation override the predetermined period of time.

According to the disclosed embodiment the water conduit 19 comprises a mixing regulator 22 arranged between the water inlet 7 and the water valve 20, the mixing regulator 22 is used when the control box 1 is connected to a first pipe configured to supply water having a first temperature (e.g. cold) and to a second pipe configured to supply water having a second temperature (e.g. warm). The output water from the control box 1 must not have a temperature that risk to scald/burn the operator.

According to the disclosed embodiment the water conduit 19 comprises a pressure restriction device 23 arranged upstream the water valve 20. The pressure restriction device 23 is preferably a washer having a restriction hole, and the pressure restriction device 23 is configured to decrease the flow of water and to decrease the pressure of the water, in order to reduce the risk of splashing. The water flow from the control box 1 is preferably equal to or less than 5 liters per minute, more preferably equal to or less than 4 liters per minute. The water flow from the control box 1 is preferably equal to or more than 1 liter per minute, more preferably equal to or more than 2 liters per minute.

According to the preferred embodiment disclosed in figure 2, the control box comprises a compressor 24 having an outlet opening 25 for pressurized air. The inlet opening of the compressor 24 is in communication with the outside the control box 1. The compressor 24 is supported by vibration damping members 26, in order not to transfer vibrations from the compressor 24 to the control box 1. The compressor 24 is preferably a piston compressor, for instance a so-called swash-plate type compressor, and the compressor 24 is preferably oil free making it more or less maintenance-free. The sound level of the compressor 24 is preferably below 70 dB, i.e. a sound level corresponding to a typical sound level inside a car. The control box 1 may also comprise sound insulation sheets in order to reduce the sound level reaching the operator and in order to decrease any vibrations in the control box 1.

An air conduit, generally designated 27, extend from the outlet opening 25 of the compressor 24 to the air outlet 11 of the control box 1, e.g. the air conduit 27 is configured to lead compressed air to the air outlet 11. The air activation member 18 is operatively connected to the electronic control unit 21. The electronic control unit 21 is configured to activate the compressor 24 and to operate the compressor 24 a predetermined period of time upon a first manipulation of the air activation member 18. Thus, when the air activation member 18 is pushed a first time the compressor 24 is operated a predetermined period of time and air can be discharged through the air hose 12 and tool 13. The predetermined period of time is in the disclosed embodiment equal to or less than 1 minute, preferably equal to or less than 45 seconds, and most preferably equal to or les than 30 seconds. The predetermined period of time is preferably equal to or more than 10 seconds, preferably equal to or more than 15 seconds. If the individual operation time is too short the operator has to restart the compressor 24 several times, which will cause excessive wear on the compressor. The length of the predetermined period of time can be adjusted in the electronic control unit 21. A second manipulation of the air activation member 18 will shut off the compressor 24 before the predetermined period of time has elapsed, i.e. the second manipulation override the predetermined period of time. A compressor starting capacitor 28 is in a conventional way operatively connected to the electronic control unit 21 and to the compressor 24 if the control box 1 is provided with a single-phase connection.

In the first embodiment, the compressor 24 does not comprise a pressure tank or the like, instead the air conduit 27 comprises a pressure release valve 29. The pressure release valve 29 is configured to open towards the atmosphere if the pressure in the air conduit 27 exceeds a predetermined pressure threshold, for instance equal to or less than 4 bar, preferably equal to or less than 3,5 bar. The pressure threshold is preferably equal to or higher than 2 bar, more preferably equal to or higher than 2,5 bar. Thus, the pressure threshold regulates the maximum pressure level in the air hose 12 and tool 13. For safety reason the compressor 24 also comprises an over pressure valve 30 that is configured to open towards the atmosphere at a pressure level higher than the pressure threshold of the pressure release valve 29, for instance in the range 6-10 bar, in order not to damage the compressor 24 if the pressure release valve 29 malfunction.

Thereto, a load dump valve 31 is connected to the air conduit 27 and is operatively connected to the electronic control unit 21. The load dump valve 31 is configured to dump the pressure in the air conduit 27 when the compressor 24 is shut off, since the compressor 24 according to the disclosed embodiment is not able to start against an increased back-pressure in the air conduit 27.

According to a preferred embodiment the electronic control unit 21 is configured to only admit activation of supply of water or air. Thus, if the water valve 20 is open and the air activation member 18 is manipulated/activated the water valve 20 will be closed and the supply of air is activated instead, and if the supply of air is active and the water activation member 17 is manipulated/activated the supply of air will be closed and the water valve 20 is opened. Thereto, it is preferred that in the case both the air activation member 18 and the water activation member 17 are manipulated at the same time only the activation member that was manipulated first will activate supply of the corresponding fluid. According to an alternative embodiment the air activation member 18 and the water activation member 17 are independent of each other, i.e. supply of air as well as water can be obtain at the same time.

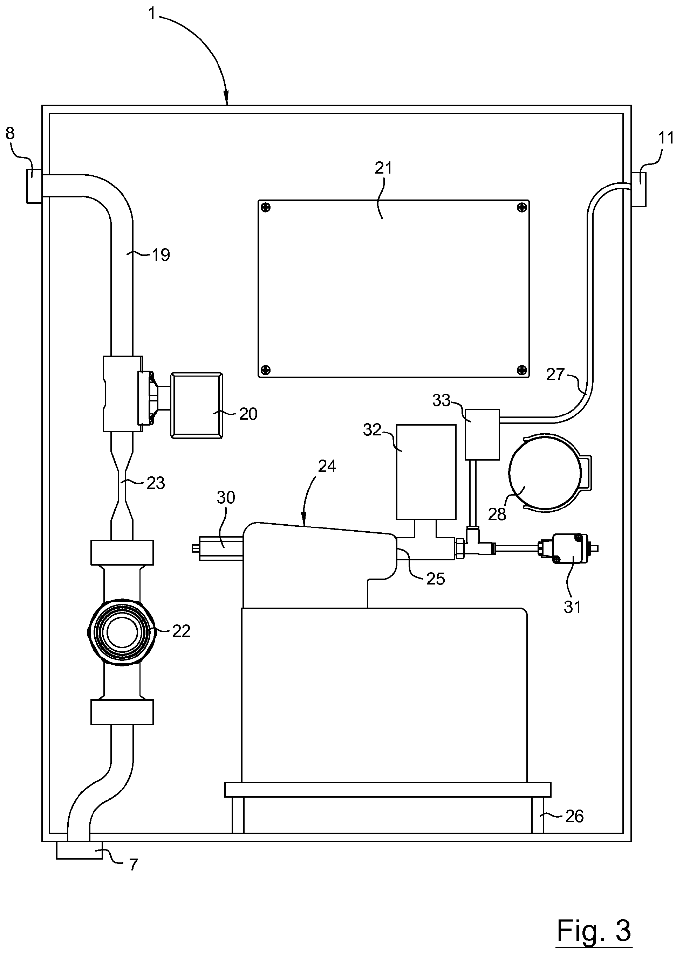

Reference is now made to figure 3, disclosing a second embodiment of the inside of the control box 1.

In the second embodiment the pressure release valve 29 is removed and replaced with other elements. In the disclosed embodiment the air conduit 27 comprises a pressure tank 32 and an air regulator 33. The air regulator 33 can be constituted by an electronic air regulator that is operatively connected to the electronic control unit 21 or a passive air restriction device. The air regulator 33 is configured to regulate the pressure level in the air hose 12 and tool 13. The pressure level is for instance equal to or less than 4 bar, preferably equal to or less than 3,5 bar, and the pressure level is preferably equal to or higher than 2 bar, more preferably equal to or higher than 2,5 bar. The pressure tank 32 is configured to act as a buffer when the compressor is 24 is in operation and the operator do not discharge air via the tool 13.

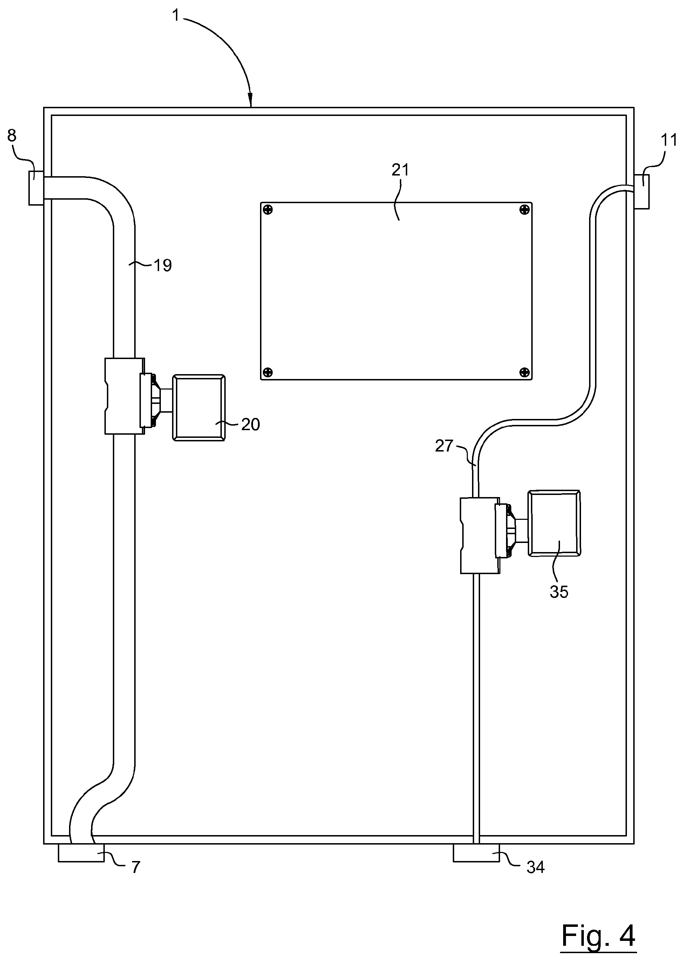

Reference is now made to figure 4, disclosing a third embodiment of the inside of the control box 1. This embodiment does not comprise an internal compressor.

The control box 1 comprises an air inlet 34 configured to be connected to an air source, e.g. an external compressor, wherein the air conduit 27 extend from the air inlet 34 to the air outlet 11, e.g. the air conduit 27 is configured to lead air from the air inlet 34 to the air outlet 11. Thereto, the control box 1 comprises an air valve 35 connected to the air conduit 27 and configured to open/close the air conduit 27. The air valve 35 is biased towards a closed position, i.e. a position/state in which no air is allowed to flow through the air conduit 27 past the air valve 35. The air valve 35 is preferably a magnetic valve that is closed by means of a mechanical spring and is opened when the electromagnet is activated. The air valve 35 is operatively connected to the electronic control unit 21. The electronic control unit 21 is configured to change the position/state of the air valve 35 from closed to open and configured to keep the air valve 35 in the open position/state a predetermined period of time upon a first manipulation of the air activation member 18. Thus, when the air activation member 18 is pushed a first time the air valve 35 is open a predetermined period of time and air can be discharged through the air hose 12 and tool 13. The predetermined period of time is in the disclosed embodiment equal to or less than 1 minute, preferably equal to or less than 45 seconds, and most preferably equal to or les than 30 seconds. The length of the predetermined period of time can be adjusted in the electronic control unit 21. A second manipulation of the air activation member 18 will close the air valve 35 before the predetermined period of time has elapsed, i.e. the second manipulation override the predetermined period of time.

A lock unit (not discloses) may be connected to the control box 1, such that operator must verify that he is authorized to use the wash station before the control box 1 is energized. This is preferably made by means of the key, the tag, the code, etc. that the operator normally use to open the front door of the building. The lock unit, for instance the electronic control unit 21, may comprise a timer that de-energizes the control box 1 after a predetermined period of time such as 10 or 15 minutes. The control box 1 may also be energized by manipulating the water activation member 17 and the air activation member 18 at the same time.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equivalents thereof. Thus, the equipment may be modified in all kinds of ways within the scope of the appended claims.

It shall also be pointed out that even thus it is not explicitly stated that features from a specific embodiment may be combined with features from another embodiment, the combination shall be considered obvious, if the combination is possible.

## Claims

1. A wash station suitable for bicycles, comprising a control box (1) that comprises:
- a water inlet (7) configured to be connected to a water source,
- a water outlet (8) configured to be connected to a water hose (9), and
- a water conduit (19) extending from the water inlet (7) to the water outlet (8),
the wash station being **characterized in that** the control box (1) comprises:
- a water valve (20) connected to the water conduit (19) and configured to open/close said water conduit (19), the water valve (20) being biased towards a closed state,
- an electronic control unit (21) operatively connected to the water valve (20), and
- a water activation member (17) operatively connected to the electronic control unit (21),
wherein the electronic control unit (21) is configured to change the state of the water valve (20) from closed to open and to keep the water valve (20) open a predetermined period of time upon a first manipulation of the water activation member (17).

2. The wash station according to claim 1, wherein the water inlet (7) comprises a first connection for influent water having a first temperature and a second connection for influent water having a second temperature, and the water conduit (19) comprises a mixing regulator (22) arranged between the water inlet (7) and the water valve (20).

3. The wash station according to claim 1 or 2, wherein the water conduit (19) comprises a pressure restriction device (23) arranged upstream the water valve (20).

4. The wash station according to any of claims 1-3, wherein the wash station comprises a water hose (9) connected to the water outlet (8).

5. The wash station according to any preceding claim, wherein the wash station comprises a filter insert (16) configured to be installed in a floor drain (15).

6. The wash station according to claim 5, wherein the filter insert (16) is constituted by a mesh pouch comprising bark.

7. The wash station according to any preceding claim, wherein the control box (1) comprises:
- an air outlet (11) configured to be connected to an air hose (12),
- a compressor (24) having an outlet opening (25) for pressurized air,
- an air conduit (27) extending from the outlet opening (25) of the compressor (24) to the air outlet (11),
- an air activation member (18) operatively connected to the electronic control unit (21), wherein the electronic control unit (21) is configured to activate the compressor (24) and to operate the compressor (24) a predetermined period of time upon a first manipulation of the air activation member (18).

8. The wash station according to claim 7, wherein the wash station comprises an air hose (12) connected to the air outlet (11).

9. The wash station according to claim 7 or 8, wherein the air conduit (27) comprises a pressure release valve (29).

10. The wash station according to any of claims 7-9, wherein the air conduit (27) comprises a load dump valve (31).

11. The wash station according to any of claims 1-6, wherein the control box (1) comprises:
- an air inlet (34) configured to be connected to an air source,
- an air outlet (11) configured to be connected to an air hose (12),
- an air conduit (27) extending from the air inlet (34) to the air outlet (12),
- an air valve (35) connected to the air conduit (27) and configured to open/close said air conduit (27), the air valve (35) being biased towards a closed state, and
- an air activation member (18) operatively connected to the electronic control unit (21), wherein the electronic control unit (21) is configured to change the state of the air valve (35) from closed to opened and to keep the air valve (35) open a predetermined period of time upon a first manipulation of the air activation member (18).
